# EUROPÄISCHE PATENTANMELDUNG

(11) **EP 3 244 275 A2**
(43) Veröffentlichungstag der Anmeldung: **15.11.2017**
(21) Anmeldenummer: 17166186.1
(22) Anmeldetag: 12.04.2017
(51) Int. Cl.: G05B 19/042, B65G 1/137, G06Q 50/28, B65G 1/08

(54) **DURCHLAUF-REGALEINHEIT ZUR BEREITSTELLUNG VON MATERIAL IN LOGISTIK- UND FERTIGUNGSPROZESSEN**

(30) Priorität: 10.05.2016 DE 102016108582
(71) Anmelder: WERMA Holding GmbH + Co. KG, 78604 Rietheim-Weilheim (DE)
(72) Erfinder: Höhler, Christian, 78669 Wellendingen (DE); Kensy, Daniel, 78532 Tuttlingen (DE)
(74) Vertreter: Otten, Roth, Dobler & Partner mbB Patentanwälte

(57) **Zusammenfassung**

Es wird eine Durchlauf-Regaleinheit zur Bereitstellung von Material in Logistik- und/oder Fertigungsprozessen mit mehreren, in Längsrichtung geneigten Regalfächern (3), wobei jedes Regalfach (3) zur Aufnahme von mehreren, in Längsrichtung nebeneinander angeordneten Materialbehältern (4) ausgebildet ist, wobei Regalfächer (3) jeweils mehrere Sensoren (5) zur Füllstandsüberwachung des jeweiligen Regalfaches (3) aufweisen, wobei in Längsrichtung zwischen Sensoren (5) des jeweiligen Regalfaches (3) ein Abstand (A) vorgesehen ist, der im Wesentlichen der Länge der aufzunehmenden Materialbehälter (4) des Regalfaches (3) entspricht, wobei Regalfächer (3) jeweils wenigstens eine Zustandsanzeigevorrichtung (10) zur Anzeige des Zustands und/oder Füllstandes des jeweiligen Regalfaches (3) aufweisen, vorgeschlagen, die wenigstens teilweise die Nachteile des Standes der Technik verbessert. Dies wird erfindungsgemäß dadurch erreicht, dass Regalfächer (3) jeweils wenigstens eine Fach-Kontrolleinheit (6) zur Kontrolle der jeweiligen Sensoren (5) des jeweiligen Regalfaches (3) umfassen, wobei die Fach-Kontrolleinheiten (6) jeweils als Energie- und Datenübertragungseinheiten (6) zur Energie-Versorgung der jeweiligen Sensoren (5) des jeweiligen Regalfaches (3) mit elektrischer Energie sowie zum Erfassen, Empfangen und Senden von Sensordaten der jeweiligen Sensoren (5) des jeweiligen Regalfaches (3) ausgebildet sind.

## Beschreibung

Die Erfindung betrifft eine Durchlauf-Regaleinheit zur Bereitstellung von Material in Logistik- und/oder Fertigungsprozessen mit mehreren, in Längsrichtung geneigten Regalfächern gemäß dem Oberbegriff des Anspruchs 1.

### Stand der Technik

In der Serienproduktion, wie beispielsweise in der Automobilfertigung oder Elektronikgeräteherstellung, werden an jedem Arbeitsplatz zumeist unterschiedliche Bauteiltypen beziehungsweise Bauteile verbaut. Die unterschiedlichen Bauteile werden meist in Vorratsbehältern am Arbeitsplatz bereitgestellt. Hierbei muss sichergestellt sein, dass stets eine ausreichende Anzahl an Bauteilen beziehungsweise Vorratsbehältern bereitgestellt ist. So soll die Anzahl der an dem Arbeitsplatz bereitgestellten Vorratsbehälter möglichst gering sein, damit der Platzbedarf gering ist, die Mitarbeiter möglichst kurze Wege zur Entnahme zurücklegen müssen und zudem wenig Kapital bzw. Material gebunden wird.

Um einen reibungslosen Ablauf des Fertigungsprozesses am Arbeitsplatz zu gewährleisten muss stets auch eine ausreichende Anzahl der benötigten Bauteile zur Verfügung gestellt werden, d.h. dass für jeden entnommenen Behälter beziehungsweise Bauteile entsprechend wieder Bauteile beziehungsweise Materialbehälter nachgeliefert beziehungsweise ersetzt werden müssen. In der Serienproduktion wird unter anderem bei der Bereitstellung von Kleinteilen die Bereitstellung häufig nach dem sogenannten Kanban-Prinzip organisiert. Bei kleineren Teilen handelt es sich um Teile, die gewisse Größenabmessungen nicht überschreiten, so dass sie üblicherweise in standardisierten Vorratsbehältern mit vorgegebener beziehungsweise gerasteter Größe untergebracht werden können. Hierbei sind üblicherweise zahlreiche Kleinteile in einem Vorratsbehälter untergebracht.

Es haben sich sogenannte Durchlauf-Regalsysteme in der Serienproduktion bewährt, wobei von einer ersten Seite beziehungsweise von der Rückseite her, ein Arbeiter das Material beziehungsweise die Vorratsbehälter in das Durchlauf-Regalsystem stellt, d.h. das Material beziehungsweise die Materialbehälter einlagert, und von der gegenüberliegenden zweiten Seite beziehungsweise auf der Vorderseite des Durchlauf-Regalsystems üblicherweise ein zweiter Arbeiter den Materialbehälter mit mehreren Kleinteilen beziehungsweise Bauteilen für seinen Arbeitsplatz entnimmt und die entsprechenden Produkte aus unterschiedlichsten Kleinteilen beziehungsweise Bauteilen herstellt.

Da die herzustellenden Produkte üblicherweise aus unterschiedlichsten Kleinteilen gefertigt werden, sind derartige Regalsysteme unterschiedlichst aufgebaut. So kann beispielsweise ein Durchlauf-Regal auf einer Ebene mehrere Regalfächer aufweisen, wobei die Regalebenen vielfach von der Aufnahmeseite zur Entnahmeseite hin geneigt beziehungsweise schräg nach unten verlaufend ausgerichtet sind, so dass die Materialbehälter längs der einzelnen Regalfächer per Gewichtskraft in Richtung Entnahmeseite verstellt werden, bis zu einem Anschlag beziehungsweise einem bereits im Regalfach befindlichen Materialbehälter.

Bei komplexeren Serienprodukten beispielsweise weisen derartige Durchlauf-Regalsystem nicht nur eine einzige Regalebene, sondern mehrere übereinander angeordnete Regalebenen auf, die geneigt ausgerichtet sind. Das bedeutet, dass in der Praxis beispielsweise Durchlauf-Regaleinheiten mit insgesamt 7x5 Regalfächern über- beziehungsweise nebeneinander angeordnet sind. Für die Herstellung eines anderen Produktes wird dagegen beispielsweise ein Durchlauf-Regalsystem mit 1x4 Regalfächern, d.h. eine einzige Regalebene mit vier nebeneinander angeordneten, geneigten separaten Regalfächern für vier verschiedene Bauteile/Behälter vorgesehen.

Zwischenzeitlich sind bereits Kontroll- beziehungsweise Überwachungs-/Steuerungssysteme für derartige Durchlauf-Regaleinheiten im Einsatz, wobei mittels Sensoren, die im Raster beziehungsweise im Abstand der jeweils verwendeten Materialbehälter-Dimensionen längs eines Regalfaches angeordnet sind, ermittelt werden kann, ob noch Materialbehälter beziehungsweise wie viele Materialbehälter in dem jeweiligen Regalfach sich befinden. Zur Unterstützung beziehungsweise Fehlervermeidung wurden für die Arbeiter bereits Lampen beziehungsweise Leuchtanzeigen an jedem Regal angeordnet. Diese Zustandsanzeigen zeigen an bzw. signalisieren dem Arbeiter, ob genügend Materialbehälter im jeweiligen Regalfach sind und/oder ob das jeweilige Regalfach zu wenig Materialbehälter aufweist und entsprechend Nachschub beziehungsweise neue, gefüllte Materialbehälter hineingestellt oder welche Bauteile/Behälter entnommen werden müssen.

Für den Lagerist beziehungsweise den Arbeiter, der neue befüllte Materialbehälter nachliefern soll, ist eine derartige Anzeige beziehungsweise Leuchte auf der Aufnahmeseite beziehungsweise Rückseite des Durchlauf-Regals/Regalfachs angeordnet und/oder für den entnehmenden Arbeiter beziehungsweise für den Arbeitsplatz ist auf der Entnahmeseite eine Anzeige beziehungsweise Leuchte angeordnet, so dass jeweils dem Arbeiter angezeigt werden kann, dass in Bezug zu diesem Regalfach Handlungsbedarf besteht.

Dementsprechend sind Erfassungs- beziehungsweise Kontrollsysteme für derartige Durchlauf-Regalsysteme an unterschiedlichste Anforderungen anzupassen, das betrifft insbesondere eine unterschiedliche Anzahl an einzelnen Regalfächern und/oder Regalebenen. Zudem sind zahlreiche unterschiedlichste Komponenten wie Sensoren, Anzeigen, Auswerteeinheiten oder dergleichen vorzusehen, die jeweils elektrisch/datentechnisch verbunden werden müssen.

Bisherige Systeme sind jedoch vergleichsweise aufwendig und unflexibel beziehungsweise weisen einen hohen Verkabelungsaufwand auf, was sich insbesondere wirtschaftlich ungünstig auswirkt und wobei vergleichsweise leicht Fehler bei der Montage/Installation als auch im Betrieb vorkommen können.

### Aufgabe und Vorteile der Erfindung

Aufgabe der Erfindung ist es demgegenüber, eine Durchlaufregaleinheit zur Bereitstellung von Material in Logistik- und/oder Fertigungsprozessen mit mehreren, in Längsrichtung geneigten Regalfächern vorzuschlagen, die wenigstens teilweise die Nachteile des Standes der Technik verbessert.

Diese Aufgabe wird, ausgehend von einer Durchlaufregaleinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Durchlaufregaleinheit dadurch aus, dass Regalfächer jeweils wenigstens eine Fach-Kontrolleinheit zur Kontrolle der jeweiligen Sensoren des jeweiligen Regalfaches umfassen, wobei die Fach-Kontrolleinheiten jeweils als Energie- und Datenübertragungseinheiten zur Energie-Versorgung der jeweiligen Sensoren des jeweiligen Regalfaches mit elektrischer Energie sowie zum Erfassen, Empfangen und Senden von Sensordaten der jeweiligen Sensoren des jeweiligen Regalfaches ausgebildet sind, wobei wenigstens eine Regal-Kontrolleinheit zur Kontrolle von mehreren Fach-Kontrolleinheiten der Regalfächer vorgesehen ist, wobei die wenigstens eine Regal-Kontrolleinheit zur Energie-Versorgung der mehreren Fach-Kontrolleinheiten der jeweiligen Regalfächer mit elektrischer Energie sowie zum Erfassen, Empfangen und Senden von Daten der mehreren Fach-Kontrolleinheiten der jeweiligen Regalfächer ausgebildet ist, wobei wenigstens eine Zentral-Kontrolleinheit zur Kontrolle der wenigstens einen Regal-Kontrolleinheit vorgesehen ist, wobei die Zentral-Kontrolleinheit zum Erfassen, Empfangen und Senden von Daten der wenigstens einen Regal-Kontrolleinheit ausgebildet ist.

Mit Hilfe derartiger Fachkontrolleinheiten, die jeweils einem Regalfach zugeordnet sind und wobei mehrere Fachkontrolleinheiten einer einzigen bzw. gemeinsamen Regalkontrolleinheit zugeordnet sind und wobei ggf. mehrere Regalkontrolleinheiten wiederum einer einzigen bzw. gemeinsamen, zentralen Kontrolleinheit zugeordnet sind, kann eine vorteilhafte Systemarchitektur verwirklicht werden, die flexibel an unterschiedlichste Regalsysteme bzw. Anwendungsfälle anpassbar ist. Die Durchlaufregaleinheit gemäß der Erfindung kann in vorteilhafter Weise modulartig bzw. modular erweitert oder reduziert und/oder an bereits bestehende Durchlaufregale angepasst werden.

So ist mit Hilfe der Erfindung die Anzahl der Fachkontrolleinheiten vorzugsweise mit der Anzahl der Regaleinheiten identisch, z.B. unabhängig davon, ob beispielsweise das Durchlaufregalsystem eine Regalfachmatrix von 4x5 Regalfächern oder 2x20 Regalfächern oder 12x3 Regalfächern aufweist bzw. bereits hat. Das heißt, dass die Durchlaufregaleinheiten in beliebiger Weise matrixartig aufgebaut werden können, wobei die jeweilige Matrix aus entsprechend nebeneinander und/oder übereinander angeordneten separaten Regalfächern besteht.

Auch kann in vorteilhafter Weise eine Fachkontrolleinheit jeweils eine fest vorgegebene Anzahl an Sensoren, vorzugsweise vier Sensoren, aufweisen, die jeweils längs des Regalfaches bzw. in Längsrichtung entlang des Regalfaches, insb. einer oder mehrerer Regalschienen oder dergleichen, fixiert bzw. montiert werden. Hiermit kann ein standardisiertes bzw. definiertes Fachmodul realisiert werden, das heißt, dass ein Fachmodul zumindest eine (einzige) Fachkontrolleinheit und jeweils mehrere Sensoren, insbesondere zwischen zwei und vier Sensoren, umfasst. Das vorteilhafte Fachmodul ist an das jeweilige, einzelne Regalfach angeordnet bzw. diesem zugeordnet. Zusätzlich kann ein Regalfach-Modul noch weitere Betriebselemente wie eine Signalisierungs-/Anzeigevorrichtung wie eine Lampe, LED, Lautsprecher, sog. Pieps je Regalfach bzw. Fachkontrolleinheit aufweisen. Hierbei kann die Fachkontrolleinheit die (elektronische und/oder elektrische bzw. datenverarbeitungstechnische) Kontrolle, Erfassung, Aufbereitung und/oder Weiterleitung etc. der Daten/Informationen zumindest von den und/oder für die Modulkomponente/-elemente des jeweiligen Regalfaches realisieren. Das heißt, dass die Fachkontrolleinheit des jeweiligen Regalfaches möglichst alle Regalfach spezifischen/relevanten Komponenten/Elemente kontrolliert/steuert/regelt und hierbei auch mit der Regalkontrolleinheit des gesamten Regals in Wechselwirkung bzw. im Daten-/Informationsaustausch steht.

Vorteilhafterweise werden mehrere/alle Fachkontrolleinheiten bzw. Regalfachmodule eines Regals im Sinn der Erfindung mit einer (einzigen) Regalkontrolleinheit verbunden bzw. verkabelt, so dass jeweils alle zu erfassenden Regalfächer bzw. Fachkontrolleinheiten bzw. Regalfachmodule und insb. auch die weiteren Betriebselemente wie eine Signalisierungs-/ Anzeigevorrichtung wie eine Lampe, LED, Lautsprecher, sog. Pieps, einer einzigen Regalkontrolleinheit in vorteilhafter Weise zugeordnet sind. Hiermit wird eine klare und fehlervermeidende Struktur bzw. Architektur der Elemente bzw. Komponenten realisiert, was sich vorteilhaft in Bezug auf den Verkabelungsaufwand als auch auf die Fehlertoleranz des Systems auswirkt.

Vorzugsweise werden die Fachkontrolleinheiten und/oder die Sensoren mit Hilfe der Regalkontrolleinheit sowohl mit elektrischer Energie versorgt, als auch datentechnisch verbunden. Das bedeutet, dass in vorteilhafter Weise sowohl die Energieversorgung als auch die Sensordaten bzw. Informationen/elektronischen Daten der gesamten Durchlaufregaleinheit bzw. aller erfasster Regalfächer über die jeweilige Regalkontrolleinheit umgesetzt werden.

Die vorteilhafte Zentralkontrolleinheit kann beispielsweise mehrere (dezentrale) Regalkontrolleinheiten und somit mehrere Durchlaufregale zumindest datentechnisch verknüpfen, so dass eine zentrale Erfassung bzw. Kontrolle aller Regalfächer bzw. aller Durchlaufregale möglich wird. Beispielsweise kann mit Hilfe der zentralen Kontrolleinheit eine Anbindung an ein übergeordnetes betriebswirtschaftliches (firmenweites) Datenverarbeitungssystem realisiert werden. Beispielsweise kann die zentrale Kontrolleinheit die Sensordaten, insbesondere von den Fachkontrolleinheiten und/oder Regalkontrolleinheiten aufbereitete Sensordaten, mit einem zentralen Betriebswirtschaftssystem bzw. Logistiksystem oder dergleichen verbinden. Dies kann sowohl eine Kommunikation lediglich in eine Richtung, d.h. von den Sensoren über die Fachkontrolleinheiten zur Regalkontrolleinheit und wiederum zur Zentralkontrolleinheit, als auch bidirektional, d.h. sowohl in die eine Richtung als auch zurück in die entgegengesetzte Richtung aufweisen. Hiermit können vorteilhafte statistische Auswertungen und/oder Regelungen/Steuerungen verwirklicht werden, wie bspw. den Nachschub von Materialbehältern für das Durchlaufregalsystem und/oder für die Entnahme bzw. Produktion am Arbeitsplatz.

Von besonderem Vorteil ist, dass mit Hilfe der Durchlaufregaleinheit gemäß der Erfindung eine vorteilhafte Nachrüstung bestehender Durchlaufregale realisiert werden kann. So können bereits vorhandene nicht überwachte bzw. sensorisch erfasste Kanban-Regale oder dergleichen mit Hilfe des vorliegenden Systems nachgerüstet und somit bspw. in bereits vorhandene betriebswirtschaftliche Datenverarbeitungssysteme eingebunden werden.

In einer vorteilhaften Ausführungsform der Erfindung ist eine Reihenschaltung von mehreren Fachkontrolleinheiten und/oder mehreren Regalkontrolleinheiten vorgesehen. Hiermit wird erreicht, dass bspw. eine vorteilhafte Zuordnung bzw. Auswertung/Verwertung der Sensordaten ohne großen Aufwand möglich wird. Bspw. kann eine aufwendige Adressierung der Fachkontrolleinheiten bzw. Regalkontrolleinheiten entfallen. Vielmehr kann bereits durch die (feste) Anordnung der Fachkontrolleinheiten bzw. der Regalkontrolleinheiten in der Reihenschaltung gemäß der Erfindung bereits aufgrund ihrer Position in der Reihenschaltung einen festzugeordneten Platz bzw. quasi eine Adresse aufweisen, so dass eine datentechnische Busadressierung bzw. Buskommunikation mit entsprechend großem Aufwand entfallen kann. Das bedeutet, dass bspw. die in der Reihe an Position 1 verschaltete/angeordnete Fachkontrolleinheit die Nummer bzw. Adresse 1 erhält und die an zweiter Position sich in der Reihenschaltung befindliche Fachkontrolleinheit die Nummer bzw. Adresse 2 erhält usw. So wird quasi durch die Verschaltung/Installation der Fachkontrolleinheiten bzw. Regalkontrolleinheiten eine quasi automatische Adressierung realisiert, ohne dass eine Busadressierung/Buskommunikation mit bspw. entsprechenden DIP-Schaltern oder dergleichen erforderlich sind.

Vorteilhafterweise ist eine Sternschaltung von mehreren Regalkontrolleinheiten vorgesehen. Hiermit wird die Flexibilität der Erfindung bzw. die realisierbare Struktur bzw. Architektur der Komponenten erhöht. Es ist in dieser Weiterbildung der Erfindung von besonderem Vorteil, wenn bei der Sternschaltung mehrerer Regalkontrolleinheiten jede Regalkontrolleinheit bei der Datenübertragung bzw. Kommunikation mit der zentralen Kontrolleinheit eine Adresse bzw. eine Zuordbarkeit der übermittelten Daten aufweist.

Alternativ oder wenigstens teilweise in Kombination zur zuvor genannten (festen) Anordnung der Fachkontrolleinheiten bzw. der Regalkontrolleinheiten, wobei den jeweiligen Einheiten aufgrund ihrer Position in der Reihenschaltung ein festzugeordneter Platz zugewiesen bzw. quasi eine automatische Adressierung realisiert wird, kann eine vorteilhaft automatisierte Positionserkennung bzw. Positionszuweisung/Adressierung der Fachkontrolleinheiten und/oder der Regalkontrolleinheiten realisiert werden.

In einer besonderen Weiterbildung der Erfindung umfassen wenigstens die Regalkontrolleinheit und die Fachkontrolleinheiten eines jeweiligen Regalfaches jeweils eine Positionserkennungseinheit mit zumindest einem Sender zum Senden von Informationen/Signale und mit zumindest einem Empfänger zum Empfangen von Informationen/Signale. Hiermit können Informationen/Signale zur Positionserkennung zwischen den Kontrolleinheiten, d.h. vor allem zwischen der Regalkontrolleinheit und zumindest einer der bzw. den Fachkontrolleinheiten und/oder zwischen zwei/den Fachkontrolleinheiten, in vorteilhafter Weise ausgetauscht werden, insbesondere mit/über Kabel/Leitungen, die die Kontrolleinheiten verbinden.

Bei einer bevorzugten Variante einer Reihenschaltung von mehreren Fachkontrolleinheiten mit zumindest einer Regalkontrolleinheit kann in vorteilhafter Weise jede Kontrolleinheit des Regalfaches, d.h. die Regalkontrolleinheit und alle Fachkontrolleinheiten, (gleichzeitig oder zeitlich wenigstens teilweise versetzt bzw. nacheinander) in einem (jeweils) ersten Arbeitsschritt/Takt mit dem jeweiligen Sender eine erste Information/Nachricht senden, die die benachbarte oder ggf. alle Kontrolleinheiten mit dem jeweiligen Empfänger empfängt. Vorteilhafterweise werden (insb. gleichzeitig und/oder synchron) von allen Kontrolleinheiten diese ersten Nachrichten in der Reihenschaltung in die gleiche bzw. in eine erste Richtung versendet, vorzugsweise von der Regalkontrolleinheit in Richtung zu den Fachkontrolleinheiten bzw. zu der benachbarten ("ersten") Fachkontrolleinheit. Es ist jedoch auch denkbar, dass innerhalb der Reihenschaltung die erste Nachricht jeweils in beide Richtungen der Reihenschaltung versendet wird. Dies ist nicht von relevantem Nachteil.

Anschließend bzw. in einem zweiten/weiteren Arbeitsschritt/Takt wird in vorteilhafter Weise wenigstens eine oder vorzugsweise jede Kontrolleinheit des Regalfaches, d.h. die Regalkontrolleinheit und alle Fachkontrolleinheiten, mit dem jeweiligen (ersten) Sender oder mit einem zweiten Sender bzw. einem Antwortsender (insb. gleichzeitig und/oder synchron) eine Antwort bzw. zweite Information/Nachricht senden, die zumindest die benachbarte Kontrolleinheit mit dem jeweiligen (ersten) Empfänger oder mit einem zweiten Empfänger bzw. einem Antwortempfänger empfängt. Hierbei wird jedoch in vorteilhafter Weise die Antwort bzw. "zweite" Nachricht in zur ersten Richtung entgegengesetzten Richtung versendet bzw. geantwortet, d.h. in vorteilhafter Weise eine Bestätigung bzw. Quittierung (zurück) gesendet, insb. ein sog. ACK-Signal. Dementsprechend erhält die "letzte" Kontrolleinheit, insb. Fachkontrolleinheit, innerhalb der Reihenschaltung des Regalfaches keine Antwort bzw. keine "zweite" Nachricht, d.h. kein Quittierungssignal.

Vorzugsweise umfasst die/jede Positionserkennungseinheit zumindest einen Kontroller, insb. sog. Mikrokontroller oder dergleichen. In vorteilhafter Weise erfasst der Kontroller von jeder Kontrolleinheit des Regalfaches, d.h. von der Regalkontrolleinheit und von allen Fachkontrolleinheiten, ob eine Antwort bzw. zweite Nachricht oder ob keine Antwort bzw. keine zweite Nachricht empfangen werden konnte. Der Kontroller der "letzten" Kontrolleinheit, insb. der "letzten" Fachkontrolleinheit, "weiß" bzw. registriert hierdurch, dass er/sie der "letzte" Kontroller" bzw. die "letzte" Kontrolleinheit bzw. "letzte" Fachkontrolleinheit der Reihenschaltung und/oder des Regalfaches ist.

So ist im Wesentlichen ein erster Zyklus bzw. Nachricht-Antwort-Takt der Positionserkennungsphase abgeschlossen.

In einer besonderen Variante der Erfindung kontrolliert dieser "letzte" Kontroller in vorteilhafter Weise den Sender bzw. Antwortsender dieser "letzten" Kontrolleinheit für die nachfolgende Zeit bzw. weiteren Arbeitsschritte/Takte der Positionserkennungsphase. Dies kann zum Beispiel dahingehend vorgesehen werden, dass diese Kontrolleinheit bzw. dieser Sender im zuvor dargelegten Sinn im weiteren Verlauf der Positionserkennungsphase keine Antwort bzw. keine "zweite" Nachricht sendet oder zumindest eine spezielle Antwort als "letzte" Kontrolleinheit. Das bedeutet, dass eine "letzte" Kontrolleinheit bzw. "letzter" Kontroller während der Positionserkennungsphase anschließend keine Antwort bzw. keine "zweite" Nachricht im zuvor dargelegten Sinn versendet, d.h. entsprechend nicht gleich wie die anderen Kontrolleinheiten oder nicht mehr auf eine "erste" Nachricht antwortet/reagiert, sondern ggf. bei Bedarf mit einer "letzten Antwort" antwortet.

Im weiteren Verlauf der Positionserkennungsphase kann in einer ersten, denkbaren Variante der Erfindung anschließend in vorteilhafter Weise ein zweiter Zyklus bzw. zweiter Nachricht-Antwort-Takt der Positionserkennungsphase folgen. Hierfür wird wiederum (insb. gleichzeitig und/oder synchron) eine sog. "erste" bzw. quasi "dritte" Nachricht von den Kontrolleinheiten versendet. Hierbei muss z.B. die zuvor als "letzte" Kontrolleinheit der Reihenschaltung bezeichnete/bewertete Kontrolleinheit nun nicht zwingend eine "erste" Nachricht versenden, da dies ohne relevantem Nachteil wäre bzw. in gewisser Weise überflüssig/unnötig ist.

Bevorzugt versendet die zuvor bzw. im "ersten" Zyklus als "letzte" Kontrolleinheit der Reihenschaltung bezeichnete/bewertete Kontrolleinheit zumindest im "zweiten" Zyklus bzw. im "vierten" Arbeitsschritt/Takt keine Antwort bzw. keine "zweite" bzw. quasi "vierte" Nachricht, d.h. kein Bestätigungs- bzw. Quittierungssignal. Dementsprechend erhält nun die "zweitletzte" Kontrolleinheit, insb. Fachkontrolleinheit, innerhalb der Reihenschaltung und/oder des Regalfaches keine Antwort bzw. keine "zweite"/"vierte" Nachricht. Der Kontroller dieser "zweitletzten" Kontrolleinheit, insb. der "zweitletzten" Fachkontrolleinheit, "weiß" bzw. registriert hierdurch wiederum, dass er/sie der "zweitletzte" Kontroller bzw. die "zweitletzte" Kontrolleinheit bzw. "zweitletzte" Fachkontrolleinheit der Reihenschaltung und/oder des Regalfaches ist.

Diese Zyklen bzw. Nachricht-Antwort-Takte werden in vorteilhafter Weise so oft bzw. so lange wiederholt, bis alle Kontrolleinheiten, insb. Fachkontrolleinheiten, ihre Position bzw. Adresse/Nummer innerhalb der Reihenschaltung bzw. des Regalsystems "kennen", d.h. insb. zugeordnet bekommen haben. So wird in vorteilhafter Weise bei jedem Zyklus quasi die Reihenschaltung bzw. die jeweils "letzte" Kontrolleinheit/Fachkontrolleinheit "heruntergezählt", bis die "erste" Kontrolleinheit, insb. die Regalkontrolleinheit, keine Antwort bzw. sog. "zweite" Nachricht erhält. Damit kann die Positionserkennungsphase bei dieser ersten, denkbaren Variante der Erfindung beendet werden.

In einer bevorzugten zweiten bzw. alternativen Variante der Erfindung sendet die Regalkontrolleinheit mit dem jeweiligen (ersten) Sender eine (erste numerische) Nachricht an die "erste" bzw. benachbarte Fachkontrolleinheit des Regalfaches, vorzugsweise die Information dass diese "erste" bzw. benachbarte Fachkontrolleinheit die "erste Fachkontrolleinheit" ist. Hiermit erhält diese erste Fachkontrolleinheit in vorteilhafter Weise zugleich die Adresse bzw. Nummer "eins" des (jeweiligen) Regalfaches. Vorteilhafterweise sendet die "erste" Fachkontrolleinheit an die Regal-Kontrolleinheit des Regalfaches in einem weiteren Takt/Arbeitsschritt eine Rückantwort bzw. Nachricht, d.h. eine Bestätigung bzw. Quittierung, insb. ein sog. ACK-Signal.

Anschließend in einem weiteren Takt/Arbeitsschritt sendet die "erste" Fachkontrolleinheit an die "zweite" bzw. benachbarte Fachkontrolleinheit des Regalfaches eine ("zweite" numerische) Nachricht, vorzugsweise die Information dass diese "zweite" bzw. benachbarte Fachkontrolleinheit die "zweite Fachkontrolleinheit" ist. Hiermit erhält diese erste Fachkontrolleinheit in vorteilhafter Weise zugleich die Adresse bzw. Nummer "zwei" des (jeweiligen) Regalfaches. Vorteilhafterweise sendet die "zweite" Fachkontrolleinheit an die "erste" Fachkontrolleinheit des Regalfaches in einem weiteren Takt/Arbeitsschritt wiederum eine Rückantwort bzw. Nachricht, d.h. eine Bestätigung bzw. Quittierung, insb. ein sog. ACK-Signal.

Diese Zyklen bzw. Takte werden in vorteilhafter Weise so oft bzw. so lange wiederholt, bis alle Kontrolleinheiten, insb. Fachkontrolleinheiten, ihre Position bzw. Adresse/Nummer innerhalb der Reihenschaltung bzw. des Regalsystems "kennen", d.h. insb. automatisiert zugeordnet bekommen haben.

Abschließend können in vorteilhafter Weise die Kontrolleinheiten, insb. Fachkontrolleinheiten, ihre Position bzw. Adresse/Nummer innerhalb der Reihenschaltung der Regalkontrolleinheit des Regalfaches und/oder der Zentral-Kontrolleinheit mitteilen.

Vorteil der zweiten bzw. alternativen Variante der Erfindung gegenüber der o.g. ersten, denkbaren Variante der Erfindung ist, dass diese weniger Takte/Arbeitsschritte benötigt bzw. schneller durchführbar ist.

Eine besonders bevorzugte Ausführungsform der Erfindung ist eine "Mischform" der zuvor genannten beiden Varianten der Erfindung. Hierbei wird vorzugsweise zur Ermittlung der "letzten" Kontrolleinheit der o.g. erste Zyklus bzw. Nachricht-Antwort-Takt der Positionserkennungsphase der ersten Variante der Erfindung durchgeführt und anschließend wird als zweiter Zyklus bzw. Nachricht-Antwort-Takt der Positionserkennungsphase, d.h. in einem nachfolgenden bzw. "dritten" Takt/Arbeitsschritt der Positionserkennungsphase, die zweite Variante der Erfindung mit dem Senden einer bzw. von mehreren "numerischen" Nachrichten und insbesondere in einem weiteren Takt/Arbeitsschritt mit einer Rückantwort bzw. Nachricht vorgesehen, d.h. einer Bestätigung bzw. Quittierung, insb. einem sog. ACK-Signal. Hiermit wird eine sehr schnelle und zugleich besonders flexible und sichere, automatisierte Adressierung bzw. Positionserkennung realisierbar.

Darüber hinaus ist denkbar, dass eine vergleichbare automatisierte Adressierung bzw. Positionserkennung auch in Bezug zu (mehreren) Regal-Kontrolleinheiten durchführbar bzw. vorgesehen ist. Demgemäß könnten mehrere Regalfächer bzw. Regal-Kontrolleinheiten entsprechend mittels einer der zuvor genannten Varianten adressiert bzw. nummeriert werden, wobei die mehreren Regal-Kontrolleinheiten den mehreren Fachkontrolleinheiten und die Zentral-Kontrolleinheit der Regal-Kontrolleinheit des Regalfaches entsprechen könnten.

Demzufolge kann eine vorteilhafte automatisierte Positionserkennung bzw. Positionszuweisung/Adressierung der Fachkontrolleinheiten und/oder der Regalkontrolleinheiten realisiert werden. Hiermit ist die gesamte Kontrolle bzw. der Betrieb einer erfindungsgemäßen Durchlauf-Regaleinheit in vorteilhafter Weise flexibel an unterschiedlichste Regalsysteme mit unterschiedlichster Anzahl an Regalen und/oder Regalfächern und/oder Kontrolleinheiten, d.h. Regalkontrolleinheiten und/oder Fachkontrolleinheiten, anpassbar.

Generell wird durch ein gleichzeitiges und/oder getaktetes Senden und/oder Empfangen eine sehr schnelle Kommunikation zwischen mehreren Kontrolleinheiten bzw. des Systems realisierbar, was in vorteilhafter Weise die Positionserkennung beschleunigt bzw. die Positionserkennungsphase verkürzt. Entsprechend schnell bzw. ohne großen Aufwand ist eine beliebige Zusammenstellung von Kontrolleinheiten bzw. der erfindungsgemäßen Durchlaufregaleinheit in unterschiedlichsten Größen bzw. Strukturen möglich.

Grundsätzlich können alle verwendeten Komponenten miteinander über elektrische Verbindungsleitungen bzw. elektrische Drähte/Kabel in vorteilhafter Weise verbunden werden. Vorzugsweise ist wenigstens eine Funkeinheit zur drahtlosen Übertragung von Daten und/oder Energie wenigstens zwischen der zentralen Kontrolleinheit und der wenigstens einen bzw. mehrerer Regalkontrolleinheiten vorgesehen. Gerade mit Hilfe einer drahtlosen Funkübertragung von Daten/Informationen zwischen der zentralen Kontrolleinheit, wie einem zentralen Computer, Server oder dergleichen, zu der wenigstens einen Regalkontrolleinheit oder zu mehreren Regalkontrolleinheiten können auch vergleichsweise große Strecken ohne großen Aufwand überwunden werden. Dies ist gerade bei einer Nachrüstung von Durchlaufregalen mit Hilfe des vorliegenden erfindungsgemäßen Systems und deren Einbindung an eine bestehende bspw. betriebswirtschaftliche Datenverarbeitung, insbesondere Software oder dergleichen, von besonderem Vorteil. So kann nämlich vor Ort bzw. unmittelbar an oder im Durchlaufregal durchaus eine vorteilhafte Verkabelung realisiert werden und mit Hilfe der Funkeinheit kann dann die Datenkommunikation mit der Zentrale bzw. zentralen Kontrolleinheit drahtlos bzw. über Funk z.B. unidirektional und/oder bidirektional realisiert werden.

Darüber hinaus ist durchaus auch eine Sensor-Funkeinheit zur drahtlosen Übertragung von Daten und/oder Energie wenigstens zwischen der Zentralkontrolleinheit und eines der Sensoren vorgesehen. Hiermit kann bspw. eine direkte Übermittlung der Daten des jeweiligen Sensors zur zentralen Kontrolleinheit bzw. zum zentralen Computer/Server oder dergleichen erfolgen. Hierbei können nicht-aufbereitete Sensordaten unmittelbar an die zentrale Kontrolleinheit z.B. unidirektional und/oder bidirektional übermittelt werden.

Vorzugsweise erfolgt eine Aufbereitung bzw. Bearbeitung der Sensordaten mit Hilfe der jeweiligen Fachkontrolleinheit und/oder der jeweiligen Regalkontrolleinheit, so dass bereits vorteilhaft aufbereitete bzw. komprimierte Daten an die zentrale Kontrolleinheit übermittelbar sind.

Vorteilhafterweise ist die Zustandsanzeigevorrichtung wenigstens an einem Aufnahmeendbereich des Regalfaches und/oder an der Regalkontrolleinheit angeordnet. Somit kann die Zustandsanzeigevorrichtung, z.B. an/in der Regalkontrolleinheit angeordnet/integriert, dem jeweiligen Arbeiter, der die Befüllung des Durchlaufregals bzw. der den Nachschub für die Durchlaufregaleinheit gemäß der Erfindung zu tätigen hat, hiermit bspw. ein optisches Signal geben, dass zu diesem jeweiligen Regalfach Handlungsbedarf besteht, z.B. Nachschub bzw. ein befüllter, neuer Materialbehälter fehlt bzw. einzulagern ist. Hiermit wird eine Fehlbefüllung der Regalfächer bspw. ein Einstellen eines Materialbehälters in ein falsches Regalfach weitestgehend verhindert.

In einer besonderen Weiterbildung der Erfindung ist wenigstens eine Eingabeeinheit zum Eingeben/Lesen von Informationen/Daten eines Materialbehälters und/oder Materials und/oder an der Regalkontrolleinheit vorgesehen/angeordnet. Beispielsweise ist die Eingabeeinheit als Tastatur, insbesondere Zifferntastatur, RFID- oder QR- oder Strich-Code-Lesegerät bzw. ein optischer Scanner oder dergleichen ausgebildet. Auch kann die Eingabeeinheit, z.B. an/in der Regalkontrolleinheit angeordnet/integriert, als Foto bzw. Kamera und/oder Videokamera ausgebildet werden, womit das jeweilige Material bzw. der Materialbehälter als Fotodatei bzw. Videodatei in das Datenverarbeitungssystem eingepflegt und weiterverarbeitet werden kann.

Mit Hilfe der vorteilhaften Eingabeeinheit kann bspw. ein Arbeiter ein nachzufüllendes Material bzw. nachzufüllender Materialbehälter in das System eingeben bzw. eine entsprechende Artikelnummer wird hiermit in vorteilhafter Weise erfassbar und für die weitere Auswertung bzw. Datenverarbeitung verarbeitbar.

Das Eingabegerät bzw. die Eingabeeinheit kann bspw. über eine Schnittstelle wie z. B. eine USB-Schnittstelle oder dergleichen mit der Regalkontrolleinheit verbunden werden. Es ist auch denkbar, dass bspw. ein Smartphone bzw. ein separates Telekommunikationsgerät der jeweilige Arbeiter bzw. Lagerist mitführt und mit Hilfe seines Smartphones oder dergleichen Daten bzw. Informationen des Materialbehälters und/oder des Materials aufnimmt bzw. eingibt und diese Daten bzw. Informationen an die Regalkontrolleinheit und/oder Zentralkontrolleinheit zur weiteren Be- und Verarbeitung übermittelt. So kann dann bspw. die Zentralkontrolleinheit und/oder die Regalkontrolleinheit eine Zustandsanzeigevorrichtung der Durchlaufregaleinheit entsprechend schalten bzw. dem Arbeiter bzw. dem Lageristen anzeigen, in welches Regalfach bspw. der gerade eingegebene Materialbehälter hineinzustellen ist. Bspw. kann dies mittels eines grünen Leuchtsignals oder dergleichen angezeigt werden.

Auch können weitere Anzeigevorrichtungen der Durchlaufregaleinheit gemäß der Erfindung bspw. in einem rot leuchtenden Signalzustand sich befinden, so dass der Arbeiter bzw. Lagerist den jeweiligen Materialbehälter korrekt in das einzige, mit grüner Leuchtsignalfarbe gekennzeichnete Regalfach hineinstellt. Bei der vorgenannten Ausführungsform ist die Zustandsanzeigevorrichtung zugleich als optische Warneinheit zum optischen Warnen vor fehlerhaftem Handeln ausgebildet.

Vorzugsweise ist eine Ausgabeeinheit zum Ausgeben/Anzeigen von Informationen/Daten eines Materialbehälters und/oder Materials vorgesehen. Hierbei wird es möglich, dass bspw. dem Arbeiter bzw. dem Lageristen oder dergleichen die Artikelnummer und/oder andere Informationen bzw. Titel/Bezeichnungen des Materials an einem Bildschirm, Display oder dergleichen bspw. der Regalkontrolleinheit angezeigt bekommt. Hiermit kann der Arbeiter bzw. Lagerist ein Feedback bzw. eine Kontrolle erhalten.

Vorteilhafterweise ist die Ausgabeeinheit als akustische und/oder optische Warneinheit zum akustischen und/oder optischen Warnen vor fehlerhaftem Handeln ausgebildet. Dies reduziert ein fehlerhaftes Handeln, d.h. ein fehlerhaftes Aufnehmen eines Materialbehälters in ein falsches Regalfach und/oder eine fehlerhafte Entnahme aus dem falschen Regalfach bspw. mit Hilfe eines Leuchtelementes und/oder eines Lautsprechers, Piezo-Lautsprechers, einer Schallkapsel oder dergleichen. Vorzugsweise ist ein akustisches Signal für ein korrektes Handeln und ein zu diesem unterschiedliches, zweites akustisches Signal, bspw. in anderer Tonlage und/oder Melodie, bei fehlerhaftem Handeln vorgesehen.

Vorzugsweise ist wenigstens eine Quittier- bzw. Bestätigungseinheit zum Bestätigen von durchgeführten Handlungen vorgesehen. Das bedeutet, dass ein Arbeiter bzw. Lagerist das Nachfüllen eines Regalfaches mittels eines Materialbehälters in vorteilhafter Weise bestätigt bzw. quittiert, insbesondere mit Hilfe der vorteilhaften Eingabeeinheit. Hiermit erhält das System, insbesondere Datenverarbeitungssystem, die Information bzw. die Daten zur durchgeführten Handlung, so dass eine Nachprüfbarkeit korrekten Handelns und somit eine fehlerfreie Betriebsweise gewährleistet ist.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: einen schematischen Aufbau einer Durchlauf-Regaleinheit gemäß der Erfindung,
- Figur 2: ein schematisches Schaltbild eines Ausschnittes der Durchlauf-Regaleinheit gemäß Figur 1 und
- Figur 3: schematisch dargestellt eine Datenübertragung durch parallelisierte Weiterleitungsroutine zwischen Kontrolleinheiten einer Durchlauf-Regaleinheit gemäß der Erfindung.

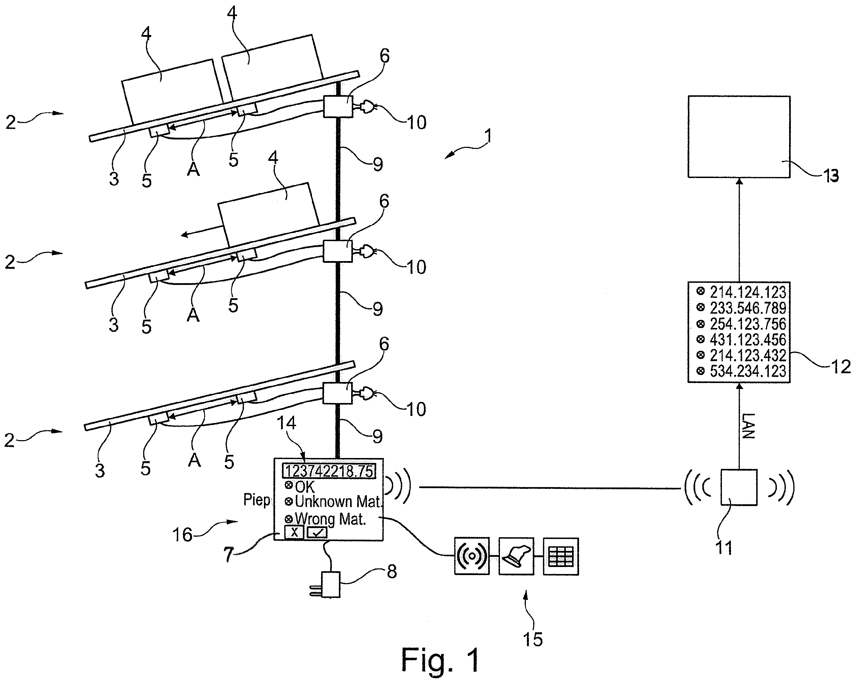

In Figur 1 ist ein Regal 1 schematisch dargestellt, wobei auf mehreren bzw. drei dargestellten Regalebenen 2 jeweils ein Regalfach 3 abgebildet ist. Demzufolge ist als Ausführungsbeispiel eine 1x3 Regalmatrix zu erkennen. Ohne nähere Darstellung könnte z.B. direkt "hinter" den dargestellten Regalfächern 3, d.h. auf den Regalebenen 2, weitere Regalfächer 3, z.B. sieben separate Regalfächer 3, angeordnet sein, so dass dann eine 8x3 Regalmatrix realisiert wäre, wobei jede der sieben (vertikalen) Regalspalten strukturell der "vorderen", dargestellten Regalspalte bzw. den dargestellten Regalfächern 3 entsprechen würde. Auch könnten verschieden breite Regalfächer 3 vorhanden sein, so dass z.B. in der obersten Ebene lediglich vier separate Regalfächer 3 und auf der mittleren Regalebene 2 z.B. acht Regalfächer 3 vorhanden sein könnten. Die (senkrecht zur Blattebene ausgerichtete) Breite des/der Regalfächer 3 ist vorzugsweise an eine Breite von Materialbehältern 4 des jeweiligen Regalfaches 3 anzupassen bzw. entspricht dieser Breite.

Die Regalebene 2 bzw. die Regalfächer 3 sind gegenüber der horizontalen Ebene geneigt angeordnet, so dass standardisierte Materialbehälter 4 wie bspw. Standardbauteilboxen oder dergleichen ohne nähere Darstellung mit Hilfe von Rollen, Walzen etc. der Regalfächer 3 mittels Gewichtskraft an ein unteres Ende des Regalfaches 3 bzw. bis zu einem bereits im Regalfach 3 vorhandenen Behälter 4 bewegt wird. Hierbei sind vorteilhafte Anschläge am Ende vorgesehen, die in Figur 1 jedoch nicht explizit dargestellt sind.

Weiterhin weist ein Regalfach 3 mehrere Sensoren 5 auf, vorzugsweise vier Sensoren 5, die am Regalfach 3 bzw. an einer Regalfachschiene mit einem Abstand A voneinander beabstandet fixiert sind. Der Abstand A entspricht im Wesentlichen der Dimensionierung des Behälters 4 bzw. der Länge des Behälters 4 und ist ggf. längs verstellbar/verschiebbar ausgebildet, um z.B. bei einem Wechsel der Produktion an unterschiedlichste Behälter 4 anpassbar zu sein. Hiermit wird eine vorteilhafte Rasterung der Sensoranordnung längs des Regalfaches 3 entlang des Verstellweges der Behälter 4 realisiert.

Entsprechend können die Sensoren 5 nach dem Befüllen eines Regalfaches 3 von einem nicht näher dargestellten Arbeiter bzw. Lageristen selbsttätig per Gewichtskraft längs des geneigten Regalfaches 3 zu einer nicht mehr dargestellten Entnahmeseite bzw. Endposition rollen bzw. sich bewegen. Dann erfassen die Sensoren 5 in vorteilhafter Weise jeweils das Vorhandensein bzw. das Nichtvorhandensein eines Behälters 4 im Bereich des jeweiligen Sensors 5. Hierzu sind bspw. optische Sensoren, insbesondere Lichtschranken, Infrarotsensoren, mechanische Schalter oder dergleichen vorgesehen.

Es hat sich gezeigt, dass vier Sensoren 5 ausreichend sind, um einen vorteilhaften Betrieb entsprechender Durchlauf-Regaleinheiten 1 zu gewährleisten, ohne dass der Betriebsablauf bei einer Serienproduktion oder dergleichen ins Stocken gerät und nicht unnötig Kapital bzw. Bauteile gebunden werden.

So ist je Regalfach 3 jeweils wenigstens eine Fachkontrolleinheit bzw. eine Sensorbox 6 vorgesehen/fixiert. Diese Sensorbox 6 ist mit den jeweiligen Sensoren 5 des jeweiligen Regalfaches 3 (elektrisch/elektronisch) verbunden, vorzugsweise wie abgebildet per Kabel. Zudem sind die einzelnen Sensorboxen 6 der jeweiligen Regalfächer 3 wiederrum miteinander (elektrisch/elektronisch) verbunden bzw. verschaltet. Vorzugsweise ist eine elektrische/elektronische Reihenschaltung der Sensorboxen 6 untereinander vorgesehen, wobei an einem Ende der Reihenschaltung eine Regalbox 7 bzw. eine gemeinsame Regal-Kontrolleinheit 7 vorgesehen ist. In Figur 1 wird deutlich, dass die Regalbox 7 einen elektrischen Anschlussstecker 8 aufweist, was symbolisch die elektrische Energieversorgung des Systems darstellen soll.

Dementsprechend werden die Sensorboxen 6 des Regals 1 mit elektrischer Energie von der Regalbox 7 vorsorgt, z.B. 230V auf 12V oder 24V für die Sensorboxen 6 transformiert. Zugleich wird über entsprechende Kabel 9, die die Reihenschaltung der Sensorboxen 6 untereinander sowie die elektrische Verbindung zur Regalbox 7 realisieren, nicht nur die elektrische Energieversorgung, sondern auch der elektronische Datenaustausch, insbesondere ein bidirektionaler Datenaustausch realisierbar.

Im dargestellten Ausführungsbeispiel ist an den Sensorboxen 6 jeweils eine Anzeigeleuchte 10 abgebildet, die den Zustand des jeweiligen Regalfaches 3 bzw. die Anwesenheit/Nichtanwesenheit der Behälter 4 des jeweiligen Regalfaches 3 signalisiert. So leuchten bspw. die in Figur 1 oberen zwei Leuchten 10 jeweils in roter Farbe, da das jeweilige Regalfach 3 (ausreichend) Materialbehälter 4 aufweist. Dementsprechend wird hiermit dem nicht näher dargestellten Arbeiter/Lageristen verdeutlicht, dass hier genügend Material bzw. Materialbehälter 4 vorhanden sind.

Dagegen weist das untere Regalfach 3 gemäß Figur 1 keinen Behälter 4 auf, so dass die beiden Sensoren 5 des unteren Regalfaches 3 eine "Nichtanwesenheit" erfassen und somit das System die Leuchte 10 bspw. in grüner Farbe aufleuchten lässt, um dem Arbeiter/Lageristen anzuzeigen, dass hier ein Materialbehälter 4 nachzufüllen bzw. das Regalfach 3 aufzufüllen ist.

Entsprechend kann ohne nähere Darstellung auf der Entnahmeseite, die nicht näher dargestellt bzw. detaillierter veranschaulicht ist, zusätzlich und/oder alternativ eine entsprechende Leuchte vorhanden sein, um dem entsprechenden Arbeiter zu signalisieren, dass er Material von diesem Regalfach 3 zu entnehmen hat, insbesondere wiederum mittels einer grünen Leuchtfarbe und/oder mittels einem Display bzw. Bildschirmanzeige oder dergleichen.

Darüber hinaus ist die Regalbox 7 derart ausgebildet, dass diese mit einer Zentral-Kontrolleinheit 11 im vorliegenden Ausführungsbeispiel drahtlos per Funk (vgl. Symbol der Sende-Empfangs-Wellen) kommunizieren kann, insbesondere bidirektional. Diese zentrale Kontroll-Einheit 11 bzw. ein sogenannter "Master" 11 ist bspw. per Datenkabel/LAN oder dergleichen mit einem lediglich symbolisch dargestellten Datenspeicher 12 verbunden und/oder mit einem Betriebswirtschaftssystem 13 bzw. einer Betriebswirtschaftssoftware verbunden. Hiermit können die Daten bzw. Informationen der Sensoren 5 der Regalfächer 3 entsprechend erfasst, gespeichert, ausgewertet bzw. aufbereitet werden und für eine betriebswirtschaftliche Datenverarbeitung und insbesondere zur Optimierung der betriebsinternen Logistikströme etc. vorteilhaft verwendet werden. Somit hat die entsprechende Firma ihre gesamten Lagerbestände der Regale 1 elektronisch bzw. datentechnisch erfasst und kann diese entsprechend vorteilhaft auswerten bzw. statistische Analysen oder dergleichen vornehmen. Beispielsweise können unterschiedlichste Analysemodule bzw. die Materialbewegungen/-ströme analysiert und optimiert werden, wobei unterschiedlichste Schnittstellen zu verschiedensten datentechnischen Systemen vorteilhaft verwendet werden können, um unter anderem Leerbestände/Überbestände oder dergleichen zu ermitteln und darzustellen sowie zu optimieren.

Gerade mit Hilfe der vorteilhaften Leuchten 10 und/oder einem Display 14 der Regalbox 7 bzw. mittels z.B. (mehrerer) Anzeige-LEDs der Regalbox 7 kann dem entsprechenden Arbeiter (zusätzlich) eine optische Anzeige bzgl. der Zustände der Regalfächer 3 und/oder der (eingelesenen) Kennzeichnung bzw. Bezeichnung der Materialbehälter 4 angezeigt werden. Beispielsweise ist eine vorteilhafte Eingabeeinheit 15, insbesondere eine Zifferntastatur, ein Scanner, ein RFID-Lesegerät oder dergleichen bspw. per Schnittstelle, insbesondere USB-Schnittstelle oder dergleichen, mit der Regalbox 7 verbunden, so dass bspw. ein Arbeiter/Lagerist eine Kennung des Materialbehälters 4 hiermit in das Dateninformationssystem einliest, mit dem Display 14 angezeigt bekommt und mittels der Leuchten 10 angezeigt bekommt, welches Regalfach 3 hierfür vorgesehen ist. Hiermit werden bei der Einlagerung bzw. beim Nachschub (menschliche) Fehler wirkungsvoll vermieden/reduziert.

Zusätzlich kann in vorteilhafter Weise eine Regalbox 7 auch ein akustisches Signalgerät wie bspw. ein Lautsprecher bzw. Piezolautsprecher oder dergleichen aufweisen, um einen Fehler wie z.B. eine Fehleinlagerung oder dergleichen akustisch zu signalisieren.

In Figur 1 wird zudem deutlich, dass das Durchlauf-Regalsystem gemäß der Erfindung vorteilhaft modular an die Anzahl der Regalfächer 3 bzw. Regalebenen 2 unterschiedlichster Regale 1 angepasst werden kann. Auch wird ein vergleichsweise geringer Verkabelungsaufwand realisierbar, da bspw. eine Sensorbox 6 mit den jeweiligen, zugehörigen Sensoren 5 modulartig vorbereitet bzw. vorkonfektioniert an jedes Regalfach 3 angebracht werden kann. Zugleich können die Sensorboxen 6 jeweils untereinander und mit der Regalbox 7 elektrisch verbunden werden, ohne dass ein großer Verkabelungsaufwand entsteht. Gegebenenfalls sind auch die elektrischen Verbindungen bzw. Kabel zwischen Sensorboxen 6 und Regalbox 7 bereits vorkonfektioniert bzw. standardisiert, was den Installations-/Montageaufwand und/oder Fehlinstallationen und/oder ggf. den Positionier- bzw. Adressieraufwand der Boxen 6, 7 reduziert.

Grundsätzlich ist denkbar, dass sowohl eine Sensorbox 6 als auch eine Regalbox 7 jeweils die empfangenen bzw. ankommenden Daten/Informationen direkt weiterleitet und/oder aufbereitet, insbesondere mit Hilfe eines jeweils enthaltenen Kontrollers bzw. Mikroprozessors oder dergleichen.

Durch die vorteilhafte Funkübertragung zwischen Regalbox 7 und zentraler Kontrolleinheit 11 bzw. dem Master 11 können auch größere Strecken in einer Firma bzw. in einem größeren Firmengebäude bzw. Fertigungshalle oder dergleichen überbrückt werden, ohne dass ein großer Aufwand für die Verkabelung bzw. die Anschlusstechnologie an ein zentrales Rechnersystem bzw. an ein betriebswirtschaftliches Datenverarbeitungssystem oder dergleichen notwendig wird. Dementsprechend empfängt eine Regalbox 7 die Zustände bzw. die Position der Sensorbox 6 über eine kabelgebundene oder drahtlose Verbindung 9. Diese Informationen/Daten werden über eine weitere Verbindung, insbesondere drahtlos gemäß Figur 1, an den Master 11 übertragen.

So kann bspw. mittels der Eingabeeinheit 15 bzw. eines Barcodescanners, RFID-Scanners, einer Tastatur oder dergleichen bspw. eine Materialnummer bzw. Kennung oder ein Code eingescannt werden, wobei mittels einer Verbindung, z.B. USB-Kabel etc., mit der Regalbox 7 diese die Materialnummer empfängt und in der Anzeige 14 darstellt und/oder an den Master 11 überträgt. Der Master 11 leitet diese Materialnummer an den Speicher 12 mittels LAN/USB oder dergleichen, wobei eine Software diese Materialnummer in vorteilhafter Weise mittels einer Datenbank bzw. Datenspeicher 12 dahingehend abgleicht bzw. prüft, in welchem Regalfach 3 dieses Material gelagert werden soll.

Die Software bzw. das System überträgt die Daten/Informationen bzgl. des korrekten Regalfachs 3 an den Master 11 und der Master 11 überträgt dies wiederrum an die Regalbox 7. Von der Regalbox 7 wird nun über die Anzeige 14 und/oder mit Hilfe der Leuchten 10 angezeigt, in welches Regalfach 3 das Material eingelagert werden soll/muss.

Beim Einlagern in das richtige Regalfach 3 erfolgt bspw. ein Quittierton mittels dem Lautsprecher 16 oder beim Einlagern in ein falsches Regalfach 3 mittels eines Fehlertons des Lautsprechers 16. Zudem kann auch eine optische Signalisierung des Fehlers mittels der Leuchte 10 erfolgen.

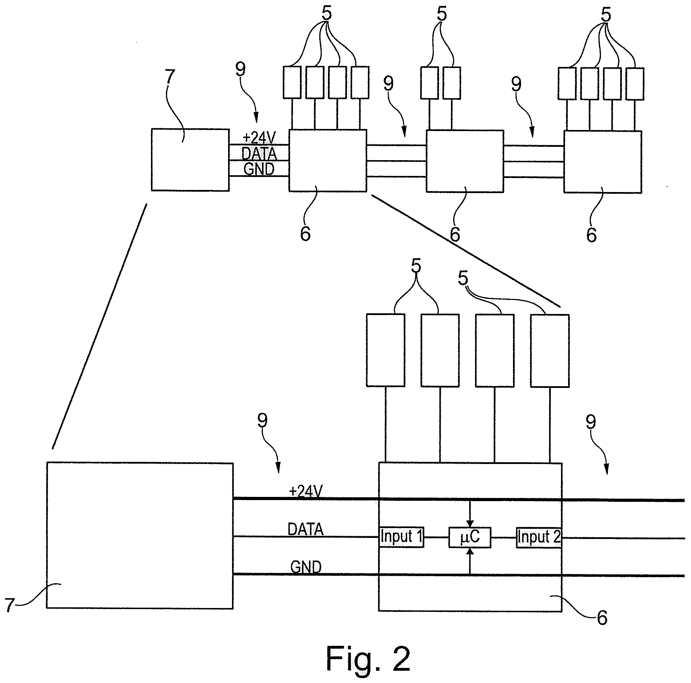

In Figur 2 ist schematisch ein Ausschnitt des Systems gemäß Figur 1 dargestellt, wobei verschiedenste Sensorboxen 6 in Reihe mit einer Regalbox 7 geschaltet sind. Zudem sind die Sensorboxen 6 jeweils mit mehreren Sensoren 5 verschaltet/ausgestattet.

Vorzugsweise wird ein dreiadriges Kabel bzw. eine Dreidraht-Verschaltung der Boxen 6, 7 vorgesehen. Es ist jedoch durchaus auch eine Zweidraht-Verbindung realisierbar, wobei bspw. die Daten/Informationen auf die Versorgungsleitungen in bekannter Weise aufmoduliert werden können. Alternativ kann eine drahtlose bzw. Funkübertragung zwischen den Boxen 6, 7 realisiert werden.

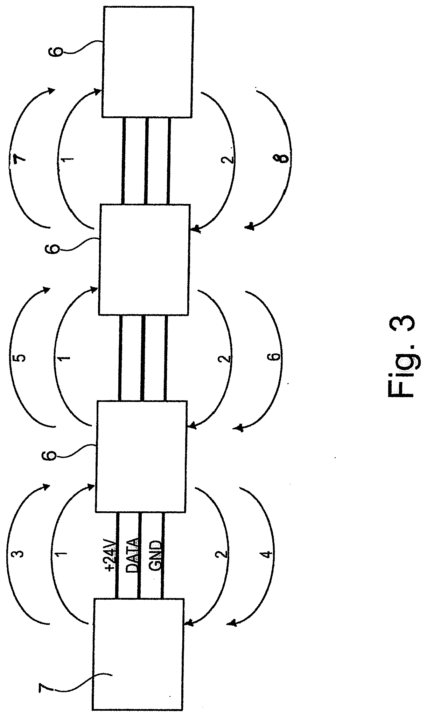

In vorteilhafter Weise ist eine automatische Erkennung der Eingänge/Ausgänge und Erkennung der letzten Sensorbox 6 realisiert. So ist in Figur 3 eine bevorzugte Variante einer automatischen Positionserkennung dargestellt. Hierbei sendet in vorteilhafter Weise eine Regalbox 7 eine Information bzw. sogenannte "Polling-Nachricht" an die benachbarte Box 6 (vgl. erster, gebogener Pfeil mit der Nummer 1 gemäß Figur 3). Diese Sensorbox 6 "weiß" hierdurch, dass ihr Input 1 an der Regalbox 7 angeschlossen ist und bestätigt dies bspw. mit einer Antwort, z.B. einem Quittierungssignal bzw. mit einem sogenannten ACK-Signal (erster, gebogener Pfeil mit der Nummer 2 gemäß Figur 3). Auch diese Sensorbox 6 sendet (gleichzeitig mit der Regalbox 7) eine Information bzw. Nachricht an die benachbarte Sensorbox 6 (zweiter, gebogener Pfeil mit der Nummer 1 gemäß Figur 3). Diese Nachbarsensorbox 6 "weiß" nun, dass ihr Input 1 an die davor angeordnete Sensorbox 6 angeschlossen ist und bestätigt dies ebenfalls mit einer Antwort, z.B. einem Quittierungssignal bzw. mit einem ACK-Signal (zweiter, gebogener Pfeil mit der Nummer 2 gemäß Figur 3).

Dies könnte gemäß einer nicht näher dargestellten Variante der automatischen Positionserkennung entsprechend weiter gehen bis die letzte Sensorbox 6 der Reihenschaltung keine Antwort von der nächsten, nicht vorhandenen "Nachbarsensorbox" 6 erhält. In dem Fall, dass keine Antwort, z.B. kein Quittierungssignal bzw. kein sogenanntes ACK-Signal von der Nachbarbox kommt, "weiß" die letzte Sensorbox 6 der Reihenschaltung gemäß Figur 3, dass sie die letzte Sensorbox 6 innerhalb des Kommunikationssystems ist.

Gemäß der in Figur 3 dargestellten, bevorzugten Variante wird jedoch im "dritten" Arbeitsschritt/Takt lediglich ein vorteilhaftes Signal bzw. eine numerische Information von der Regalbox 7 an die benachbarte Box 6 gesendet, z.B. eine (digitale) "Null" (vgl. gebogener Pfeil mit der Nummer 3 gemäß Figur 3). Diese Sensorbox 6 bzw. deren Kontroller "weiß" hierdurch, dass sie die "erste" Sensorbox 6 ist, die direkt an der Regalbox 7 angeschlossen ist, und bestätigt dies optional in einem "vierten" Arbeitsschritt/Takt bspw. mit einer Antwort, z.B. einem Quittierungssignal, insb. mit einer sogenannte "Polling-Nachricht" (gebogener Pfeil mit der Nummer 4 gemäß Figur 3) .

Anschließend in einem "fünften" Arbeitsschritt/Takt sendet diese "erste" Sensorbox 6 ein vorteilhaftes Signal bzw. eine numerische Information an die nächste bzw. benachbarte Sensorbox 6, z.B. eine (digitale) "Eins" (vgl. gebogener Pfeil mit der Nummer 5 gemäß Figur 3). Diese Nachbarsensorbox 6 bzw. deren Kontroller "weiß" hierdurch, dass sie die "zweite" Sensorbox 6 ist, die direkt an "erste" Sensorbox 6 angeschlossen ist, und bestätigt dies optional in einem "sechsten" Arbeitsschritt/Takt bspw. mit einer Antwort, z.B. einem Quittierungssignal, insb. mit einer sogenannte "Polling-Nachricht" (gebogener Pfeil mit der Nummer 6 gemäß Figur 3).

Im in Figur 3 dargestellten Beispiel ist nun die Position aller Sensorbox 6 bekannt bzw. weisen eine eindeutige bzw. bestimmte "Adresse"/Nummerierung auf, da u.a. die "letzte" Sensorbox 6 bereits mittels der beiden ersten Arbeitsschritte/Takte "weiß", dass sie die "letzte" Sensorbox 6 ist. Optional können jedoch noch die Arbeitsschritte/Takte "sieben" und/oder "acht" durchgeführt werden (vgl. gebogene Pfeile mit der Nummer 7 und 8 gemäß Figur 3).

Mit diesen vorteilhaften Kommunikationssystemen bzw. der parallelen Weiterleitungsroutine, die u.a. in Figur 3 schematisch dargestellt ist, ist eine automatisierte Positionserkennung bzw. Positionszuweisung/Adressierung realisierbar. Hiermit wird die Erfindung in vorteilhafter Weise flexibel an unterschiedlichste Regalsysteme mit unterschiedlichster Anzahl an Regalfächer 3 bzw. Sensorboxen 6 anpassbar.

So kann ein Durchlauf-Regalsystem gemäß der Erfindung vorteilhaft modular aufgebaut bzw. mit standardisierten Modulen realisiert werden. Hierdurch erweitert sich in großem Maß die Anwendbarkeit des Systems, wobei gleiche bzw. identische Einzelkomponenten verwendet werden können, sodass große Stückzahlen der einzelnen Komponenten realisiert werden können und das System wirtschaftlich günstig herstellbar ist.

### Bezugszeichenliste

- 1: Regal
- 2: Regalebene
- 3: Regalfach
- 4: Materialbehälter
- 5: Sensor
- 6: Sensorbox
- 7: Regalbox
- 8: Stecker
- 9: Kabel
- 10: Leuchte
- 11: Master
- 12: Datenspeicher
- 13: Datensystem
- 14: Anzeige
- 15: Eingabegerät
- 16: Lautsprecher

- A: Abstand

## Patentansprüche

1. Durchlauf-Regaleinheit zur Bereitstellung von Material in Logistik- und/oder Fertigungsprozessen mit mehreren, in Längsrichtung geneigten Regalfächern (3), wobei jedes Regalfach (3) zur Aufnahme von mehreren, in Längsrichtung nebeneinander angeordneten Materialbehältern (4) ausgebildet ist, wobei Regalfächer (3) jeweils mehrere Sensoren (5) zur Füllstandsüberwachung des jeweiligen Regalfaches (3) aufweisen, wobei in Längsrichtung zwischen Sensoren (5) des jeweiligen Regalfaches (3) ein Abstand (A) vorgesehen ist, der im Wesentlichen der Länge der aufzunehmenden Materialbehälter (4) des Regalfaches (3) entspricht, wobei Regalfächer (3) jeweils wenigstens eine Zustandsanzeigevorrichtung (10) zur Anzeige des Zustands und/oder Füllstandes des jeweiligen Regalfaches (3) aufweisen, **dadurch gekennzeichnet, dass** Regalfächer (3) jeweils wenigstens eine Fach-Kontrolleinheit (6) zur Kontrolle der jeweiligen Sensoren (5) des jeweiligen Regalfaches (3) umfassen, wobei die Fach-Kontrolleinheiten (6) jeweils als Energie- und Datenübertragungseinheiten (6) zur Energie-Versorgung der jeweiligen Sensoren (5) des jeweiligen Regalfaches (3) mit elektrischer Energie sowie zum Erfassen, Empfangen und Senden von Sensordaten der jeweiligen Sensoren (5) des jeweiligen Regalfaches (3) ausgebildet sind, wobei wenigstens eine Regal-Kontrolleinheit (7) zur Kontrolle von mehreren Fach-Kontrolleinheiten (6) der Regalfächer (3) vorgesehen ist, wobei die wenigstens eine Regal-Kontrolleinheit (7) zur Energie-Versorgung der mehreren Fach-Kontrolleinheiten (6) der jeweiligen Regalfächer (3) mit elektrischer Energie sowie zum Erfassen, Empfangen und Senden von Daten der mehreren Fach-Kontrolleinheiten (6) der jeweiligen Regalfächer (3) ausgebildet ist, wobei wenigstens eine Zentral-Kontrolleinheit (11, 12, 13) zur Kontrolle der wenigstens einen Regal-Kontrolleinheit (7) vorgesehen ist, wobei die Zentral-Kontrolleinheit (11, 12, 13) zum Erfassen, Empfangen und Senden von Daten der wenigstens einen Regal-Kontrolleinheit (7) ausgebildet ist.

2. Vorrichtung nach Anspruch 1, **dadurch gekennzeichnet, dass** eine Reihenschaltung von mehreren Fach-Kontrolleinheiten (6) vorgesehen ist.

3. Vorrichtung nach einem der vorgenannten Ansprüche, **dadurch gekennzeichnet, dass** eine Reihenschaltung von mehreren Regal-Kontrolleinheiten (7) vorgesehen ist.

4. Vorrichtung nach einem der vorgenannten Ansprüche, **dadurch gekennzeichnet, dass** eine Sternschaltung von mehreren Regal-Kontrolleinheiten (7) vorgesehen ist.

5. Vorrichtung nach einem der vorgenannten Ansprüche, **dadurch gekennzeichnet, dass** wenigstens eine Funkeinheit (7, 11) zur drahtlosen Übertragung von Daten und/oder Energie wenigstens zwischen der Zentral-Kontrolleinheit (11, 12, 13) und der wenigstens einen Regal-Kontrolleinheit (7) vorgesehen ist.

6. Vorrichtung nach einem der vorgenannten Ansprüche, **dadurch gekennzeichnet, dass** wenigstens eine Sensor-Funkeinheit zur drahtlosen Übertragung von Daten und/oder Energie wenigstens zwischen der Zentral-Kontrolleinheit (11, 12, 13) und eines der Sensoren (5) vorgesehen ist.

7. Vorrichtung nach einem der vorgenannten Ansprüche, **dadurch gekennzeichnet, dass** die Zustandsanzeigevorrichtung (10) wenigstens an einem Aufnahme-Endbereich des Regalfaches (3) angeordnet ist.

8. Vorrichtung nach einem der vorgenannten Ansprüche, **dadurch gekennzeichnet, dass** wenigstens eine Eingabeeinheit (15) zum Eingeben/Lesen von Informationen/Daten eines Materialbehälters (4) und/oder Materials vorgesehen ist.

9. Vorrichtung nach einem der vorgenannten Ansprüche, **dadurch gekennzeichnet, dass** wenigstens eine Ausgabeeinheit (14, 16) zum Ausgeben/Anzeigen von Informationen/Daten eines Materialbehälters (14) und/oder Materials vorgesehen ist.

10. Vorrichtung nach einem der vorgenannten Ansprüche, **dadurch gekennzeichnet, dass** die Ausgabeeinheit (14, 16) als akustische und/oder optische Warneinheit (14, 16) zum akustischen und/oder optischen Warnen vor fehlerhaftem Handeln ausgebildet ist.

11. Vorrichtung nach einem der vorgenannten Ansprüche, **dadurch gekennzeichnet, dass** wenigstens eine Bestätigungseinheit (15) zum Bestätigen von durchgeführten Handlungen vorgesehen ist.
